# EUROPÄISCHE PATENTANMELDUNG

(11) **EP 3 876 246 A1**
(43) Veröffentlichungstag der Anmeldung: **08.09.2021**
(21) Anmeldenummer: 21160381.6
(22) Anmeldetag: 03.03.2021
(51) Int. Cl.: H01B 17/00, H02G 7/00, H02G 7/20

(54) **MASTAUSLEGER MIT VOGELSCHUTZPROFIL**

(30) Priorität: 03.03.2020 CH 2522020
(71) Anmelder: AXPO Grid AG, 5401 Baden (CH)
(72) Erfinder: WUNDERLIN, Toni, 4323 Wallbach (CH)
(74) Vertreter: Keller Schneider Patent- und Markenanwälte AG (Zürich)

(57) **Zusammenfassung**

Hier wird ein Mastausleger (3) eines Freileitungsmasten (1), an welchem über mindestens einen Hochspannungsisolator (6) ein Leiterseil (7) angeordnet ist, mit einer am Mastausleger (3) lösbar befestigt angeordneten Vogelschutzvorrichtung, vorgestellt, wobei die Vogelschutzvorrichtung vereinfacht ist, problemlos angeordnet werden kann und zu einer vereinfachten massenhaften Umrüstung von Mastauslegern von Freileitungsmasten einsetzbar ist, sodass flächendeckend ungewünschte Vogel-Tod-Ereignisse an Freileitungsmasten verhindert werden. Dies wird dadurch erreicht, dass die Vogelschutzvorrichtung ein einstückig ausgeführtes selbsttragendes starres Vogelschutzprofil (9) aus einem elektrisch isolierenden Material mit mindestens einer Wand ist, welches an der dem Leiterseil (7) gegenüberliegenden Seite des Mastauslegers (3) mindestens teilweise über eine Mastauslegeroberfläche (30) durch einen Spalt (10) zwischen Mastauslegeroberfläche (30) und einer Innenfläche (91) mindestens auf einem Teil der Länge der Mastauslegeroberfläche (30) beabstandet vom Mastausleger (3), übergestülpt lösbar befestigt ist und das Vogelschutzprofil (9) den Mastausleger (3) mindestens in Richtung des Hochspannungsisolators (6) fluchtend umhüllt.

## Beschreibung

### Technisches Gebiet

Die vorliegende Erfindung beschreibt einen Mastausleger eines Freileitungsmasten, an welchem über mindestens einen Hochspannungsisolator ein Leiterseil angeordnet ist, mit einer am Mastausleger lösbar befestigt angeordneten Vogelschutzvorrichtung und ein Verfahren zur Aufrüstung von Mastauslegern von Freileitungsmasten, zur Verhinderung von Vogel-Tod-Ereignissen.

### Stand der Technik

Aus dem Stand der Technik sind unterschiedliche Freileitungsmasten 1, oft als Betonmasten ausgeführt bekannt, an welchen mehrere Mastausleger 2, 3, 4 wegragend angeordnet sind. Während zentrisch an der höchsten Spitze des Freileitungsmasten 1 ein Erdseil 8 angeordnet ist, sind an den Mastauslegern 2, 3, 4, Leiterseile 7 an Hochspannungsisolatoren 6 und Lichtbogenschutzarmaturen befestigt, geführt angeordnet. Als Hochspannungsisolatoren 6 kommen Kappenisolatoren, Vollkernisolatoren oder Langstabisolatoren, auch bekannt als Composite Insulators, zum Einsatz. Es sind gesetzlich vorgeschriebene Schlagweiten S1 bis S5 einzuhalten, damit es nicht zu Überschlägen kommt. Diese Schlagweiten ergeben sich aus den gesetzlichen Anforderungen und der physikalisch limitierten elektrischen Festigkeit von atmosphärischer Luft.

Auf Vögel 12 wurde bislang wenig geachtet. Von Hochspannungsfreileitungen geht eine Gefahr für Vögel 12 aus, wenn diese auf einem Mastausleger 2, 3, 4 sitzen und von dort aus wegfliegen. Dabei kann es zur tödlichen Annäherung oder Berührung des Leiterseils 7 und der geerdeten Masttraverse bzw. der Mastausleger 2, 3, 4 kommen. Ebenso können Vögel bei Annäherung oder Berührung von zwei Phasenleitern getötet werden. Der öffentliche Druck zur Vermeidung von Vogel-Tod an Hochspannungsfreileitungen erfordert den Umbau der Hochspannungsfreileitungen bzw. Freileitungsmaste mit dem Ziel, die Anzahl toter Vögel durch geeignete konstruktive Massnahmen zu minimieren. Gesetzliche Anforderungen lassen einen Sicherheitsabstand von 1.6 m zwischen spannungsführenden Teilen und geerdeten Teilen bzw. zwischen zwei Leiterseilen erwarten. Ein Umbau der Hochspannungsmasten auf die zu erwartenden Sicherheitsabstände würde die Abmessungen vergrössern, so dass die Hochspannungsmasten noch mehr als störend in der Landschaft empfunden würden. Diese Lösung ist daher aus technischen und wirtschaftlichen Gründen, sowie aus Umweltschutzgründen nicht sinnvoll.

Aus der DE8523201 ist eine Vogelschutzgarnitur, unmittelbar an Freileitungen angebracht, bekannt. Hier wird ein Isolierstoffschlauch beschrieben, der über einen Abschnitt des Leiterseils im Bereich der Masttraverse geschoben wird. Damit kann ein Erdschluss bei der Annäherung grösserer Vögel vermieden werden. Zur Befestigung des Isolierstoffschlauches werden Schnappelemente um den Isolierstoffschlauch gelegt. Ein Vogel kann damit nicht mehr direkt an die Leiterseile heranreichen bzw. keinen Kurzschluss zwischen Leiterseil und Erde auslösen. Der Isolierkörper wird direkt an das Leiterseil montiert, welches an einem Stützisolator oder Hängeisolator befestigt ist. Gerade weil wenig Material für den über das Leiterseil geschobenen Isolierkörper benötigt wird, scheint die Befestigung hier problematisch zu sein. Der Isolierkörper und das Leiterseil sind flexibel und aufgrund der Länge von bis zu zwei Metern soll der Isolierkörper das Leiterseil gleichmässig umschliessen. Der Flexible Isolierkörper muss um das Leiterseil geführt werden und dann mit einigen Klammern befestigt werden. Ein möglichst geringer Abstand zwischen Leiterseil und Schutzhülle ist hier das Ziel, was die Montage selbst bei abgeschalteter Hochspannung äusserst knifflig macht. Die Gestaltung des Isolierkörpers und dessen Anordnung müssen ausserdem äusserst exakt sein, damit das Innere des Isolierkörpers ausreichend gegen äussere Witterungseinflüsse geschützt wird.

Eine ähnliche Lösung wird in der DE29815864 beschrieben. Eine Vogelschutzhaube in Form eines Isolierkörpers wird über ein Abspanngelenk bzw. eine Abspann-Isolatorkette gestülpt befestigt angeordnet. Da die Isolatorenkappe, die Abspannklemme und eine Seilstrecke des Leiterseils abdecken muss, wird die Anbringung verkompliziert. Selbst bei optimierter Gestaltung der Vogelschutzhaube ist die Anbringung an einer Abspann-Isolatorkette in der Praxis schwierig, wobei auch eine ausreichende Dauerhaftigkeit der Verbindung zwischen Vogelschutzhaube und Abspann-Isolatorkette bezweifelt wird.

### Darstellung der Erfindung

Die oben beschriebenen aus dem Stand der Technik bekannten Nachteile, sollen durch die vorliegende Vorrichtung beseitigt werden.

Die vorliegende Erfindung hat sich zur Aufgabe gestellt eine vereinfachte Vorrichtung zur Verhinderung von Vogel-Tod an Freileitungsmasten zu präsentieren, die problemlos angeordnet werden kann und zu einer vereinfachten massenhaften Umrüstung von Mastauslegern von Freileitungsmasten einsetzbar ist.

Diese Aufgabe löst eine Kombination aus einem Mastausleger und einem Vogelschutzprofil mit den Merkmalen des Patentanspruches 1.

Variationen von Merkmalskombinationen bzw. geringfügige Anpassungen der Erfindung sind in der Detailbeschreibung zu finden, in den Figuren abgebildet und in die abhängigen Patentansprüche aufgenommen worden.

### Kurze Beschreibung der Zeichnungen

Der Erfindungsgegenstand wird nachstehend detailliert im Zusammenhang mit den anliegenden Zeichnungen beschrieben. Notwendige Merkmale, Einzelheiten und Vorzüge der Erfindung ergeben sich aus dieser nachfolgenden Beschreibung, wobei eine bevorzugte Ausführungsform der Erfindung und einige Zusatzmerkmale oder optionale Merkmale im Detail aufgeführt sind.
- Figur 1: zeigt einen Freileitungsmasten in Form eines Tonnenmastens mit drei Mastauslegern in drei Etagen, mit Leiterseilen an vertikalen Isolatoren und einem Erdseil zentrisch am Freileitungsmasten, gemäss Stand der Technik.
- Figur 2a: zeigt eine Frontansicht eines Freileitungsmastens mit jeweils einem Vogelschutzprofil an den Armen der unteren beiden Mastausleger, während
- Figur 2b: eine Seitenansicht des Freileitungsmastes gemäss Figur 2a zeigt.
- Figur 3a: zeigt eine detaillierte Schnittansicht durch Mastausleger und Vogelschutzprofil entlang Linie A aus Figur 2a, während
- Figur 3b: einen Längsschnitt entlang Linie B aus Figur 2b durch den Mastausleger und das Vogelschutzprofil zeigt.
- Figur 4: zeigt ein elektrisches Ersatzschaltbild zur Berechnung der Gleitfunkeneinsetzspannung zwischen Vogelschutzprofil 9 und Mastauslegeroberfläche.
- Figur 5a: zeigt eine Schnittansicht eines durch Abstandhalter fixiertes Vogelschutzprofil, während
- Figur 5b: eine Schnittansicht einer weiteren Ausführungsform des Vogelschutzprofils mit elliptischem Querschnitt zeigt.
- Figur 5c: zeigt eine Seitenansicht einer weiteren Ausführungsform des Vogelschutzprofils mit einem trapezförmigen Querschnitt, während
- Figur 5d: eine Untenansicht der weiteren Ausführungsform des Vogelschutzprofils mit einem trapezförmigen Querschnitt, und während
- Figur 5e: eine Schnittansicht der weiteren Ausführungsform des Vogelschutzprofils mit einem trapezförmigen Querschnitt zeigt.
- Figur 5f: zeigt eine Schnittansicht einer weiteren Ausführungsform des Vogelschutzprofils mit einem dreieckigen Querschnitt.
- Figur 6a: zeigt eine Schnittansicht des Vogelschutzprofils gemäss Figur 5b, wobei zusätzlich Vogelabweiser an der dem Mastausleger abgewandten Seite angeordnet sind, was auch
- Figur 6b: einer Längsschnittansicht gemäss Figur 6a entnehmbar ist.

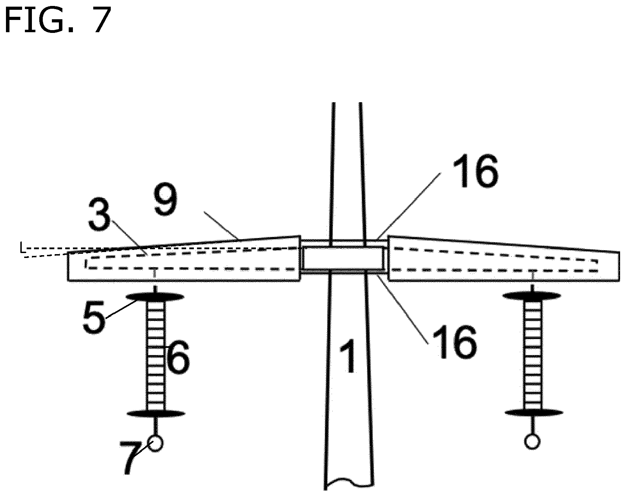

- Figur 7: zeigt eine Frontansicht eines Mastauslegers mit beidseitig angeordneten Vogelschutzprofilen, mit mindestens einem Spannband am Mastausleger befestigt.
- Figur 8a: zeigt eine Seitenansicht einer weiteren Ausführungsform des Freileitungsmastes mit einem Vogelschutzprofil, wobei der Mastausleger zusätzlich an den beiden Leiterseilen mit einem isolierenden Abstandskäfig versehen ist, während
- Figur 8b: eine Detailansicht der Isolierscheiben dieser weiteren Ausführungsform zeigt, und während
- Figur 8c: die einzelnen Isolierscheiben im Detail zeigt.

### Beschreibung

Die hier präsentierte Vorrichtung, um Vogel-Tod an Freileitungsmasten 1 zu vermeiden, zielt auf die Isolation des Erdpotentials an Mastauslegern 2, 3, 4 ab. Wie gehabt sind die Mastausleger 2, 3, 4 seitlich vom Freileitungsmasten 1 wegragend, hier in Form eines Betonmastes 1 ausgeführt, angeordnet. Mehrere Leiterseile 7 sind auf den unterschiedlichen Etagen über Hochspannungsisolatoren 6 und allgemein übliche Lichtbogenschutzarmaturen 5 isoliert an den Mastauslegern 2, 3, 4 angeordnet. Der Hochspannungsisolator 6 bzw. die Lichtbogenschutzarmatur 5 ist jeweils über eine Befestigung 11 am Mastausleger 2, 3, 4 befestigt. Nähert sich ein Vogel 12 dem Freileitungsmasten 1 oder dem Mastauslegern 2, 3, 4 dann wird ein Erdschluss zwischen Freileitungsmasten 1, den Mastauslegern 2, 3, 4, dem Vogel 12 und den einzelnen hochspannungführenden Leiterseilen 7 verhindert werden. Um dies zu erreichen, sind auf den unteren beiden Mastauslegern 3, 4 jeweils Vogelschutzprofile 9 übergestülpt gesichert angeordnet.

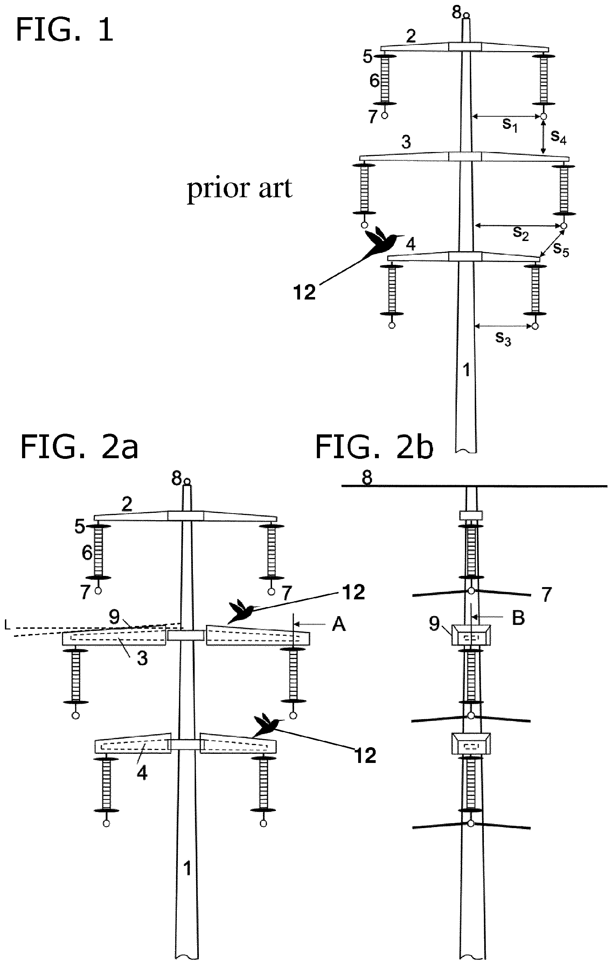

Wie in Figur 2a ersichtlich kann gemäss einer bevorzugten Ausführungsform das erfindungsgemässe Vogelschutzprofil 9 eine in Längsrichtung L sich erstreckende Längswand mit einer äusseren Oberfläche 92 umfassen, wobei hier beispielsweise die Längswand als vom Freileitungsmast 1 zum Isolator 6 hin schräg abfallende Fläche dargestellt ist. Aufgrund dieses Gefälles wird vorteilhaft verhindert, dass die elektrische Festigkeit durch auf der Fläche 92 stehendes Regenwasser nachteilig verändert wird. Wie in Figur 2a ersichtlich ist hier der Mastausleger 3 als Pyramidenstumpf ausgebildet.

Das Vogelschutzprofil 9 ist aus einem elektrisch isolierenden Material hergestellt und kann aufgrund der Profilform von der Aussenseite der Mastausleger 3, 4 in Richtung Freileitungsmasten 1 gestülpt werden. Das Vogelschutzprofil 9 ist einstückig und ohne Schlitze oder Unterbrechungen entlang seiner Oberfläche ausgeführt. Bevorzugt weist das Vogelschutzprofil 9 eine gleichbleibende Wandstärke auf und ist selbsttragend, sodass es robust gegen mechanische Belastungen ist und sich nicht den Aussenkonturen des Mastauslegers 3 anschmiegt. Eine Stirnfläche des Vogelschutzprofils 9, auf der später dem Freileitungsmasten 1 zugewandten Seite ist offen, während die Stirnfläche des Vogelschutzprofils 9, die im montierten Zustand weiter vom Freileitungsmasten 1 beabstandet ist, ist mit einer Stirnwand 90 ausgeführt. Das Vogelschutzprofil 9 weist neben zwei sich in Längsrichtung L erstreckenden Seitenwänden und einer Längswand LW, hier die einseitig abschliessende Stirnwand 90 auf.

Eine solche einseitig vorne abschliessende Stirnwand 90 hat aus hochspannungstechnischer Sicher wesentliche Vorteile, da ein Vogel, der hier vorne sitzt und die darüber liegende Leitung berührt, durch einen Überschlag zum freiliegenden Mastende getötet würde. Hierbei würde zudem ein Isolationsfehler resultieren.

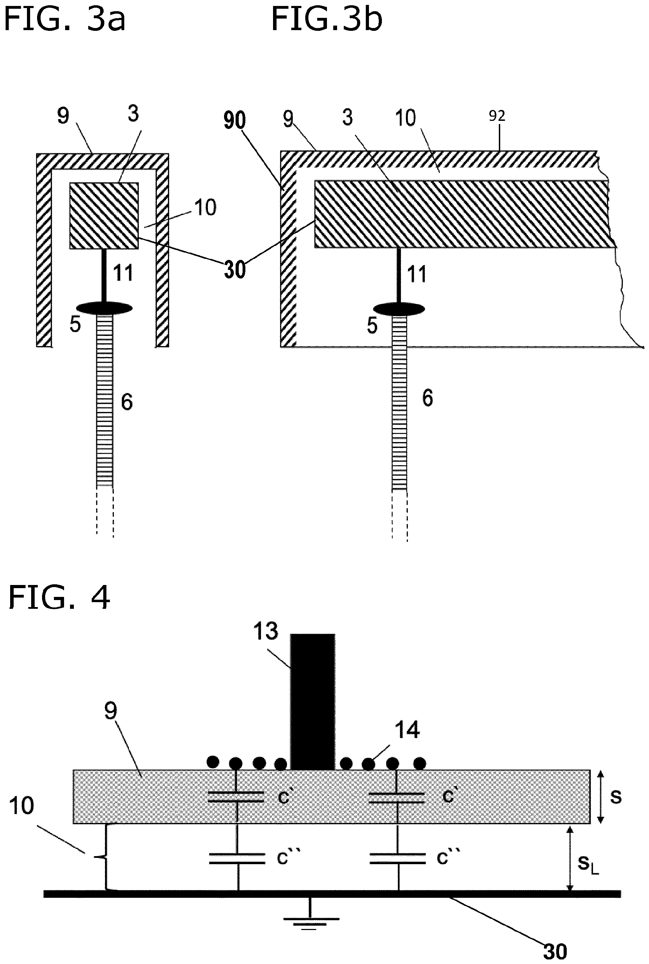

Wie in Figur 3a erkennbar ist das Vogelschutzprofil 9 nach unten offen ausgeführt, nach der Montage also in Richtung Hochspannungsisolator 6 und Leiterseil 7. Hier ist eine u-förmige Gestaltung des Vogelschutzprofils 9 im Querschnitt gewählt, wobei auch andere Querschnittsformen möglich sind, auf welche unten noch eingegangen wird. Wenn das elektrisch isolierende Material des Vogelschutzprofils 9 ausreichend starr ist, dann bildet sich ein Spalt 10, mindestens teilweise zwischen den Oberflächen 30 des Mastauslagers 3 aus, sodass eine vollflächige Berührung oder ein Anschmiegen des Vogelschutzprofils 9 an die Oberfläche 30 des Mastauslegers 3 verhindert ist. Die Höhe des Vogelschutzprofils 9 ist hier derart gestaltet, dass die Schenkelwände des Vogelschutzprofils 9 über den Mastausleger 3, die Befestigung 11, die Lichtbogenschutzarmatur 5 und den Hochspannungsisolator 6 ragen. Dadurch besteht die Sicherheit, dass sich kein Vogel 12 zwischen Mastausleger 3 und Hochspannungsisolator 6 verirren kann.

Mit Hilfe eines Ersatzschaltbildes, wobei ein Gleitpol 13, elektrische Ladungen 14, Ersatzkapazitäten und die Erdung gezeigt sind, wurden entsprechende Berechnung durchgeführt. Ein Vogel 12 kann nach Literaturangaben durch einen elektrischen Widerstand von einigen 100 kOhm dargestellt werden. Elektrisch gesehen, liegt dadurch das Potential des Leiterseils 7 auf dem Berührungspunkt auf der Oberfläche des Vogelschutzprofils 9. Diese Anordnung bildet die in der Literatur bekannte Gleitanordnung nach Figur 4. Der Vogel 12 wird dabei durch den Gleitpol 13 dargestellt. Bei ungünstigen Verhältnissen kommt es zur Ausbildung von elektrischen Entladungen am Fuss des Gleitpols 13. Da die isolierende Hülle des Vogelschutzprofils 9 ein Abfliessen der Ladung 14 verhindert, bilden sich auf der Oberfläche des Vogelschutzprofils 9 gefährliche Gleitentladungen aus, die durch Ausbildung von Gleitfunken zu einem Überschlag am Vogelschutzprofil 9 führen.

Hier konnten nötige Materialstärken s des Vogelschutzprofils 9 und Spaltdicken sL des Spalts 10 bestimmt werden. Derartige Vogelschutzprofile 9 benötigen demnach, bei den üblichen beaufschlagten Hochspannungen eine Materialstärke s bzw. Wanddicken von mindestens einem Zentimeter. Auch, wenn Figur 4 hier schematisch etwas anderes suggeriert, sollten die Spaltdicken sL 1cm oder grösser, bevorzugt mindestens 10 cm, insbesondere grössergleich 14 cm sein.

Wie Versuche gezeigt haben, sollten sämtliche Vogelschutzprofile 9 entlang ihrer Innenflächen 91, einen oder mehrere Abstandhalter 15 aufweisen. Der Abstandhalter 15 ist an der Innenfläche 91 fixiert und verdeckt diese in Richtung Mastauslegeroberfläche 30 mindestens teilweise. Auch hier wird ein ausreichend elektrisch isolierendes Material für den Abstandhalter 15 verwendet bzw. der Abstandhalter 15 kann an die Innenfläche 91 angeformt sein und aus demselben Material wie das Vogelschutzprofil 9 bestehen. In einigen Fällen könnte der Abstandhalter 15 auch von einem Kunststoffschaum gebildet werden, der in den Spalt 10 eingespritzt wird.

Der Abstandhalter 15 kann auch zur Befestigung des Vogelschutzprofils 9 an der Mastauslegeroberfläche 30 dienen.

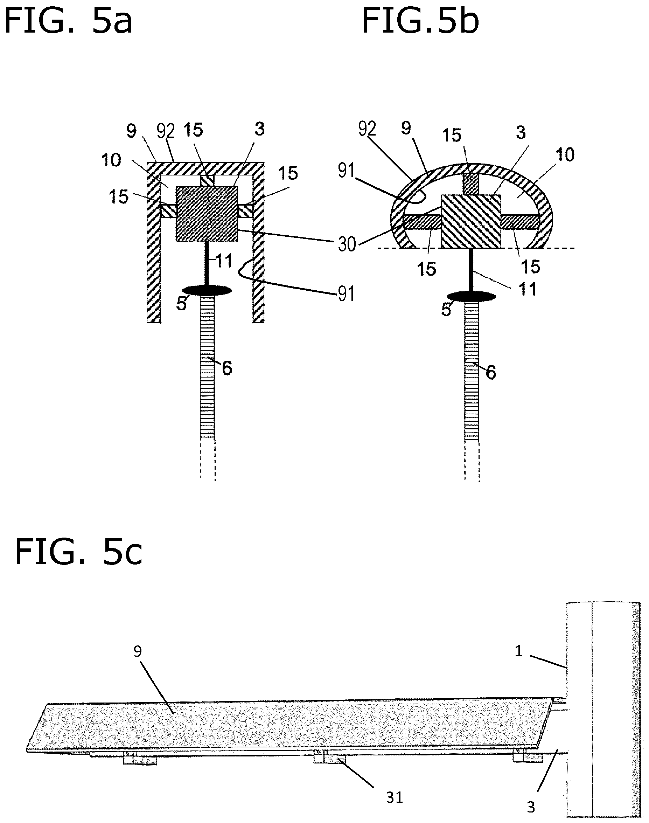

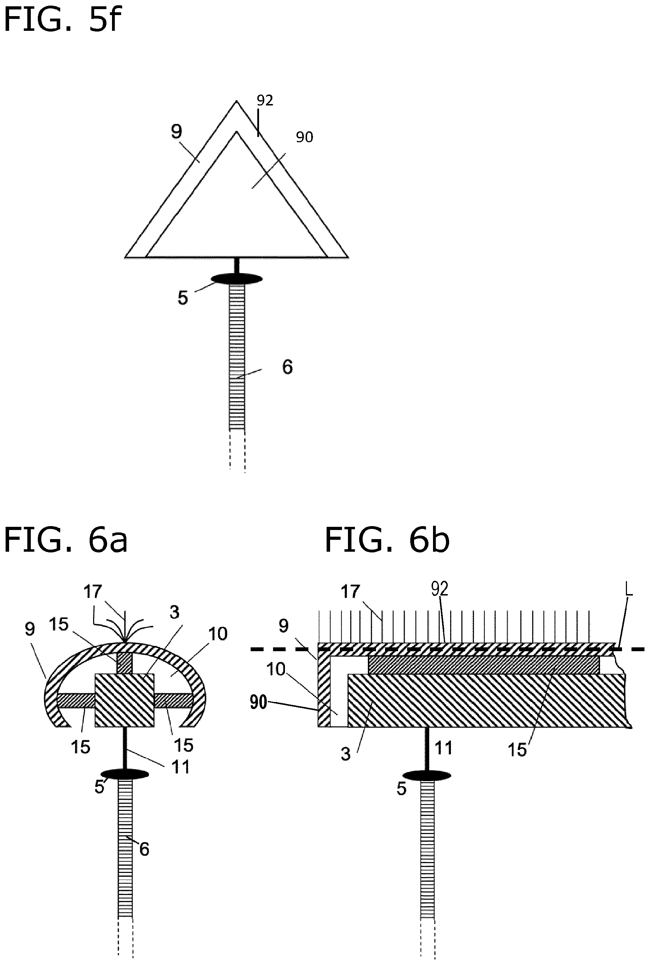

Damit das Vogelschutzprofil 9 den Witterungsbedingungen standhalten kann, sollte die äussere Gestaltung des Vogelschutzprofils 9 entsprechend angepasst sein. Dabei haben sich, alternativ oder zusätzlich zu dem in Figur 2a gezeigten Gefälle der Längswand, dreieckige Querschnittsflächen (siehe Figur 5f) oder elliptische Querschnitte, wie in Figur 5b gezeigt, als vorteilhaft erwiesen. Die Variante mit elliptischem, aerodynamisch geformtem Querschnitt mit oder ohne Abstandhalter 15 kann als Zuschnitt aus einem Kunststoffrohr hergestellt werden. Durch geeignete Formgebung kann gerade bei im Wesentlichen horizontal (d.h. ohne Gefälle) verlaufenden Mastauslegern 3 Regen, Eis und Schnee besser ablaufen und auch das Absitzen von Vögeln 12 auf der äusseren Oberfläche 92 des Vogelschutzprofils 9 wird erschwert. Mit anderen Worten wird aufgrund eines dreieckigen oder elliptischen Querschnittes vorteilhaft verhindert, dass die elektrische Festigkeit durch auf der Fläche 92 stehendes Regenwasser nachteilig verändert wird.

Das Vogelschutzprofil 9 soll derart ausgestaltet sein, dass die Seitenflächen den Mastausleger 3 vollständig umhüllen. Wie in Figur 5b gezeigt, soll das Vogelschutzprofil 9 den Mastausleger 3 mindestens in Richtung des Hochspannungsisolators 6 fluchtend umhüllen. Die Wand des Vogelschutzprofil 9 endet also auf Höhe der unteren Mastauslegeroberfläche 30, was mit einer gestrichelten Linie angedeutet ist. In anderen Varianten kann die Wand des Vogelschutzprofils 9 das Ende des Mastauslegers 3 nach unten, in Richtung Hochspannungsisolator 6 überragen, wie in Figur 5a klar erkennbar.

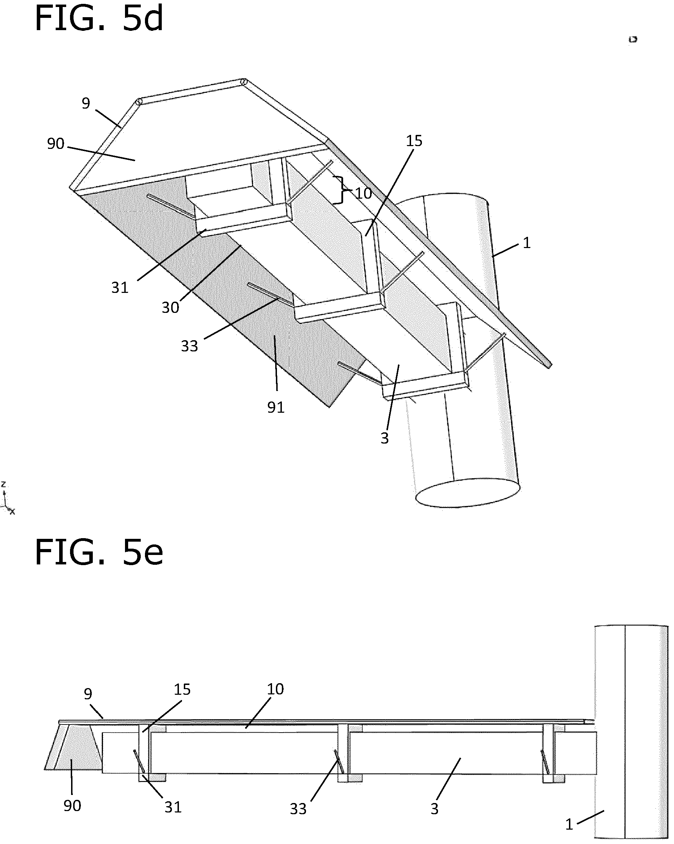

Figur 5c zeigt eine Seitenansicht einer weiteren Ausführungsform des Vogelschutzprofils mit einem trapezförmigen Querschnitt an einem hier horizontal angeordneten Mastausleger 2; 3; 4 mit rechteckigem Querschnitt, während Figur 5d eine Untenansicht und Figur 5e eine Schnittansicht dieser Variante des Vogelschutzprofils 9 mit einem trapezförmigen Querschnitt zeigt. Wie in Figur 5c ersichtlich ist die hier gezeigte Vogelschutzvorrichtung ein Vogelschutzprofil 9 aus einem elektrischen isolierenden Material, welches durch einen Spalt 10 zwischen Mastauslegeroberfläche 30 und einer Innenfläche 91 beabstandet vom Mastausleger 3 übergestülpt lösbar befestigt ist. Gemäss der in Figur 5d gezeigten Ausführung liegt hier das Vogelschutzprofil 9 auf isolierenden, U-förmigen Abstandshaltern 15 auf, welche auf den Mastausleger 3 passend aufgesteckt sein können, wobei der für die elektrische Isolation wichtige Spalt 10 beziehungsweise Isolierabstand gebildet wird. Hierbei kann das Vogelschutzprofil 9 mit den Abstandshaltern 15 beispielsweise mithilfe isolierender Kunststoffschrauben befestigt werden. Alternativ oder zusätzlich kann zur Befestigung des Vogelschutzprofils 9 der Spalt 10 mit einem Kunststoffschaum ausgefüllt werden.

Alternativ oder zusätzlich kann zur Befestigung des Vogelschutzprofil 9 mit den U-förmigen Abstandshaltern 15 verklebt werden. Der Mastausleger 3 umfasst hier ein zusätzliches Befestigungselement 31, hergestellt aus Metall oder Isolierstoff, welches nach Anbringen des Vogelschutzprofils 9 und des U-förmigen Abstandshalters 15 von unten her mit dem Abstandhalter 15 fest verschraubbar ist. Zur weiteren Stabilisierung kann hier der Mastausleger 3 eine Vielzahl weiterer, vorzugsweise aus einem Isolierstoff hergestellte, zylindrische Abstandshalter 33 umfassen zur Einstellung der Abstände zu den Seitenwänden des Vogelschutzprofils 9, die mit den U-förmigen Abstandshaltern 15 und dem Vogelschutzprofil 9 verschraubbar und / oder verklebbar sind.

Eine hier als anbringbare Endkappe ausgebildete Stirnwand 90 schliesst das Vogelschutzprofil 9 nach aussen hin ab und kann beispielweise mit dem Vogelschutzprofil 9 an den Kanten mittels Kunststoffschrauben befestigbar sein. Die als Endkappe ausgebildete Stirnwand 90 verhindert, dass ein Vogelflügel den Mastausleger 3 stirnseitig berühren kann.

Figur 2a zeigt als Pyramidenstumpf ausgebildeten Mastausleger 2; 3; 4, während Figur 3a horizontal angeordnete Mastausleger 2; 3; 4 mit rechteckigem Querschnitt zeigt, d.h. die Geometrie eines Mastauslegers 2; 3; 4 kann abhängig von der Art der daran befestigten Leitung 7 variieren. Die in den Figuren 5c, 5d und 5e gezeigte, weitere Ausführungsform hat somit den Vorteil, dass dieses Vogelschutzprofil 9 an unterschiedlich geformten Mastauslegern (quaderförmig, Pyramidenstumpf etc.) verwendet werden kann. Im Weiteren ermöglicht hier das Vogelschutzprofil 9 eine Anpassung an alle in Fragen kommenden Abmessungen eines Mastauslegers 3 ab, indem eine Anpassung an die unterschiedlichen Abmessungen der Mastausleger 3 durch Adaption des U-förmigen Abstandhalters 15, Befestigungselement 31 und Abstandshalter 33 erreicht wird. Das hier gezeigte Vogelschutzprofil kann als Spritzgussteil, als monolithischer Körper etc. herstellbar sein.

Wie in Figur 6 gezeigt, können zusätzlich angebrachte Vogelabweiser 17 auf der äusseren Oberfläche 92 dafür sorgen, dass Vögel 12 sich nicht auf dem Vogelschutzprofil 9 niederlassen können. Hier ist entlang der Längsachse L des Vogelschutzprofils 9 ein Vogelabweiser 17, umfassend eine Mehrzahl von Beinen, welche von der äusseren Oberfläche 92 wegragen, angeordnet. Vögel 12 verhindern den Kontakt mit diesen Beinen, ungeachtet des für die Beine verwendeten Materials. Dieser Vogelabweiser 17 kann in unterschiedlichen Arten und Weisen befestigt sein, beispielsweise durch Schweissen, Kleben oder durch Anformen der Beine an die äusseren Oberfläche 92 des Vogelschutzprofils 9. So können die Beine auch aus Metalldrähten ausgebildet sein und eventuell Signalfarben aufweisen.

Zur Befestigung der hier beschriebenen Vogelschutzprofile 9 ist die Verwendung von Spannbändern 16 vorgesehen, welche in bekannter Weise angelegt werden können und fixiert werden können. Das Spannband 16 umfasst ein Vogelschutzprofil 9 einseitig an einem Mastausleger 3 oder zwei Vogelschutzprofile 9 beidseitig an einem Mastausleger 3, sodass das sich das Vogelschutzprofil 9 nicht ungewünscht vom Mastausleger 3 entfernen oder verrutschen kann.

Eine weitere Befestigungsmöglichkeit ist eine Verschraubung oder Vernietung an mehreren Stellen des Vogelschutzprofils 9 am Mastausleger 3. Dabei sollten bevorzugt, Kunststoffschrauben bzw. Nieten aus Kunststoff verwendet werden, welche elektrisch isolierend sind. Unabhängig davon, ob der Mastausleger 3 aus Beton oder Metall besteht, kann so eine dauerhafte Befestigung des Vogelschutzprofils 9 erreicht werden. Eventuell reicht aber auch das oben erwähnte Ausspritzen des Spalts 10 mit einem Kunststoffschaum zur Befestigung des Vogelschutzprofils 9 bereits aus.

Um einen dauerhaften Einsatz des Vogelschutzprofils 9 zu ermöglichen, muss das verwendete Material möglichst UV-beständig sein und es kommen verschiedene Kunststoffe zum Einsatz, beispielsweise PVC, Polyethylen (PE), Silikon oder Teflon (PTFE). Das verwendete Material des Vogelschutzprofils 9 soll eine relative Permittivität, bevorzugt gemessen bei Temperaturen unter 100°C und 50 Hz zwischen 1 und 12 aufweisen, da Silikon als Isolierstoff in Frage kommt, welches eine relative Permittivität von 12 aufweist.

Bevorzugt weist das Vogelschutzprofil 9 einen gerundeten auf aerodynamische Kriterien optimierten Querschnitt mit einem geringen cW-Wert kleiner als 1.1, bevorzugt 1.05 bis kleiner 0.5 auf.

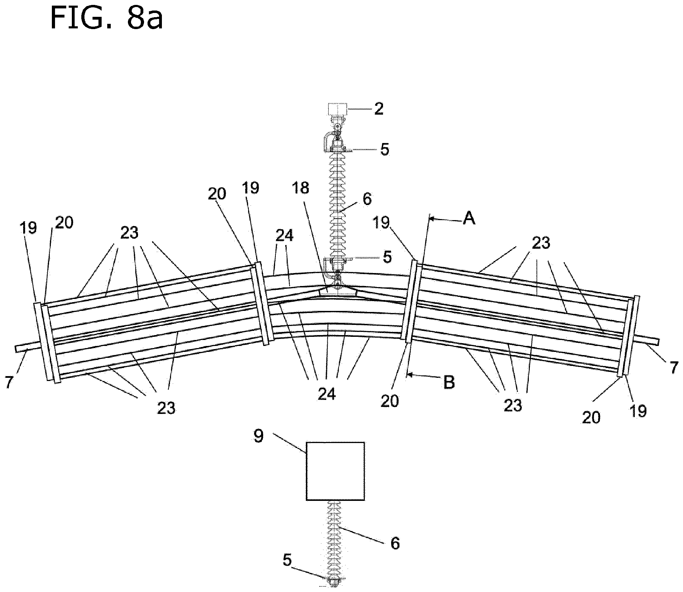

Figur 8a zeigt eine Seitenansicht einer weiteren Ausführungsform des erfindungsgemässen Mastauslegers 3 mit einem Vogelschutzprofil 9, wobei der Mastausleger 3 zusätzlich an den beiden Leiterseilen 7 mit einem isolierenden Abstandskäfig versehen ist. Hierbei ist hier der isolierende Abstandskäfig besonders bevorzugt wie in Figur 8a gezeigt derart angebracht, so dass die Seilklemme 18 frei zugänglich bleibt, so dass Montagearbeiten am Isolator einfach ausführbar sind.

Laborversuche mit einem Widerstand als elektrische Nachbildung des Vogelkörpers haben hierbei gezeigt, dass bei einer gleichzeitigen Berührung der Flügel am Leiterseil 7 und am Vogelschutzprofil 9 elektrische Vorentladungen mit erhöhtem Stromfluss durch den Widerstand auftreten. Im Weiteren hat sich in Laborversuchen gezeigt, dass ein deutlich reduzierter Widerstand auftritt, wenn ein Flügel des nachgebildeten Vogelkörpers nicht näher als 5 cm an das Leiterseil 7 heranragt und deshalb die Verwendung eines isolierenden Abstandskäfigs besonders vorteilhaft ist.

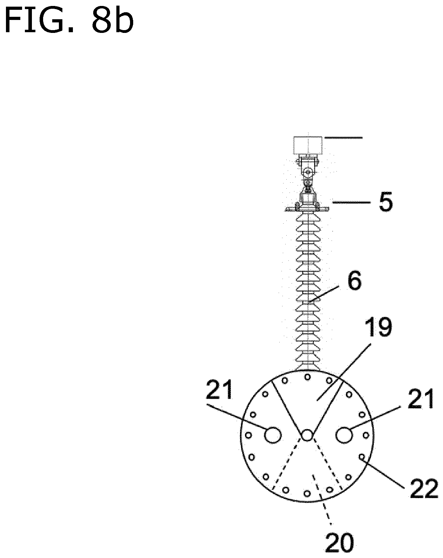

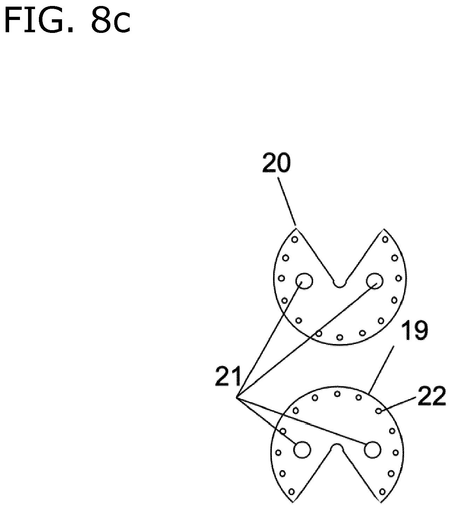

Bei der Installation werden die in Figur 8c gezeigte, obere Isolierscheibe 19 und die untere Isolierscheibe 20 mittels der ersten Bohrungen 21 miteinander verschraubt, wobei hier wie in Figur 8b gezeigt die Isolierscheiben 19; 20 um 180° verdreht angebracht sind. Insbesondere sind hier in den Isolierscheiben 19; 20 zweite Bohrungen 22 vorgesehen zum Einschieben und Fixieren einer Vielzahl von Isolierstäben 23 beziehungsweise gebogenen Isolierstäben 24 im Bereich der Seilklemme 18, vorzugsweise gebildet aus glasfaserverstärktem Kunststoff oder aus vergleichbaren wetterresistenten Isolierstoffen, wodurch ein Isolierkäfig beziehungsweise Abstandskäfig ausbildbar ist zur Verhinderung einer direkten Berührung eines Vogelflügels mit dem Leiterseil 7.

### Bezugszeichenliste

- 1: Freileitungsmast/Betonmast (geerdet)
- 2, 3, 4: Mastausleger (geerdet)
30 Mastauslegeroberfläche
31 Befestigungselement
33 Abstandshalter
- s1 bis s5: Schlagweite
- 5: Lichtbogenschutzarmatur
- 6: Hochspannungsisolatoren
- 7: Leiterseil
- 8: Erdseil/Blitzschutzseil
- 9: Vogelschutzprofil /elektrisch isolierend/einstückig
90 Stirnwand
91 Innenfläche
92 äusseren Oberfläche
s Materialstärke des Vogelschutzprofils
- 10: Spalt
sL Spaltdicke
- 11: Befestigung
- 12: Vogel
- 13: Gleitpol
- 14: elektrische Ladung
- 15: Abstandshalter/Fixierung
- 16: Spannband
- 17: Vogelabweiser
- 18: Seilklemme
- 19: obere Isolierscheibe
- 20: untere Isolierscheibe
- 21: Erste Bohrungen (der Isolierscheiben)
- 22: Zweite Bohrungen (zur Installation der Isolierstäbe 23)
- 23: Isolierstab
- 24: gebogener Isolierstab

## Patentansprüche

1. Mastausleger (3) eines Freileitungsmasten (1), an welchem über mindestens einen Hochspannungsisolator (6) ein Leiterseil (7) angeordnet ist, mit einer am Mastausleger (3) lösbar befestigt angeordneten Vogelschutzvorrichtung,
**dadurch gekennzeichnet, dass**
die Vogelschutzvorrichtung ein einstückig ausgeführtes selbsttragendes starres Vogelschutzprofil (9) aus einem elektrisch isolierenden Material mit mindestens einer Wand ist, welches
an der dem Leiterseil (7) gegenüberliegenden Seite des Mastauslegers (3) mindestens teilweise über eine Mastauslegeroberfläche (30) durch einen Spalt (10) zwischen Mastauslegeroberfläche (30) und einer Innenfläche (91) mindestens auf einem Teil der Länge der Mastauslegeroberfläche (30) beabstandet vom Mastausleger (3),
übergestülpt lösbar befestigt ist und das Vogelschutzprofil (9) den Mastausleger (3) mindestens in Richtung des Hochspannungsisolators (6) fluchtend umhüllt.

2. Mastausleger (3) mit Vogelschutzprofil (9) nach Anspruch 1, wobei die Wandstärke (s) des Vogelschutzprofils (9) mindestens ein Zentimeter ist.

3. Mastausleger (3) mit Vogelschutzprofil (9) nach Anspruch 1 oder 2, wobei der Spalt (10) zwischen einer äusseren Oberfläche (92) des Vogelschutzprofils (9) und der Mastauslegeroberfläche (30) eine Spaltdicke (sL) von mindestens einem Zentimeter, insbesondere von mehr als 10 Zentimetern aufweist.

4. Mastausleger (3) mit Vogelschutzprofil (9) nach einem der vorhergehenden Ansprüche, wobei auf einer Innenfläche (91) des Vogelschutzprofils (9) wegragend ein oder mehrere Abstandhalter (15) befestigt oder angeformt sind, welche eine Beabstandung garantieren.

5. Mastausleger (3) mit Vogelschutzprofil (9) nach einem der vorhergehenden Ansprüche, wobei das Vogelschutzprofil (9) eine u-Form im Querschnitt mit zwei Seitenwänden und einer Längswand aufweist und eine Stirnwand (90) aufweist, wobei die Stirnwand (90) im montierten Zustand des Vogelschutzprofils (9) weiter vom Freileitungsmasten (1) beabstandet angeordnet ist.

6. Mastausleger (3) mit Vogelschutzprofil (9) nach einem der Ansprüche 1 bis 4, wobei das Vogelschutzprofil (9) einen dreieckigen oder elliptischen Querschnitt aufweist, wobei an der elliptischen Längswand eine Stirnwand (90) angebracht oder angeformt ist aufweist, wobei die Stirnwand (90) im montierten Zustand des Vogelschutzprofils (9) weiter vom Freileitungsmasten (1) beabstandet angeordnet ist.

7. Mastausleger (3) mit Vogelschutzprofil (9) nach einem der Ansprüche 1 bis 4, wobei das Vogelschutzprofil (9) einen gerundeten auf aerodynamische Kriterien optimierten Querschnitt mit einem geringen cW-Wert kleiner 1.1 aufweist.

8. Mastausleger (3) mit Vogelschutzprofil (9) nach einem der vorhergehenden Ansprüche, wobei an einer äusseren Oberfläche (92) des Vogelschutzprofils (9) ein Vogelabweiser (17) entlang der Längsachse (L) verlaufend angeordnet ist.

9. Mastausleger (3) mit Vogelschutzprofil (9) nach Anspruch 8, wobei der Vogelabweiser (17) eine Mehrzahl von Beinen, welche von der äusseren Oberfläche (92) wegragen, umfasst, welche aus Kunststoff oder Metall hergestellt sind.

10. Mastausleger (3) mit Vogelschutzprofil (9) nach Anspruch 8 oder 9, der Vogelabweiser (17) durch Schweissen, Kleben oder durch Anformen an der äusseren Oberfläche (92) des Vogelschutzprofils (9) befestigt ist.

11. Mastausleger (3) mit Vogelschutzprofil (9) nach einem der vorhergehenden Ansprüche, wobei das Vogelschutzprofil (9) am Mastausleger (3) mittels eines Spannbandes (16) fixiert ist.

12. Mastausleger (3) mit Vogelschutzprofil (9) nach einem der vorhergehenden Ansprüche, wobei das Vogelschutzprofil (9) am Mastausleger (3) mittels einer Verschraubung oder Nietung befestigt ist, bevorzugt unter Verwendung von elektrisch isolierenden Kunststoff Schrauben bzw. Nieten.

13. Mastausleger (3) mit Vogelschutzprofil (9) nach einem der vorhergehenden Ansprüche, wobei das Vogelschutzprofil (9) am Mastausleger (3) mittels des Abstandshalters (15) in Form eines Kunststoffschaums in den Spalt (10) eingebracht befestigt ist.

14. Mastausleger (3) mit Vogelschutzprofil (9) nach einem der vorhergehenden Ansprüche, wobei als Material für das Vogelschutzprofil (9) ein Kunststoff verwendet wird, beispielsweise PVC, PE, Silikon oder PTFE, welche eine relative Permittivität, bevorzugt gemessen bei Temperaturen unter 100°C und 50 Hz zwischen 1 und 12 aufweisen.

15. Mastausleger (3) mit Vogelschutzprofil (9) nach einem der vorhergehenden Ansprüche, wobei der Mastausleger 3 zusätzlich an den beiden Leiterseilen 7 mit einem isolierenden Abstandskäfig versehen ist zur Verhinderung einer direkten Berührung eines Vogelflügels mit dem Leiterseil (7).

16. Verfahren zur Aufrüstung von Mastauslegern (3) von Freileitungsmasten (1), zur Verhinderung von Vogel-Tod-Ereignissen, **gekennzeichnet durch** die Schritte:
- Überstülpen eines einstückigen Vogelschutzprofil (9) aus einem elektrisch isolierenden Material, mindestens teilweise über eine Mastauslegeroberfläche (30) von dieser Mastauslegeroberfläche (30) durch einen Spalt (10) mindestens auf einem Teil der Länge der Mastauslegeroberfläche (30) getrennt und anschliessende
Befestigung des Vogelschutzprofils (9) am Mastausleger (3) mit mindestens einem Spannband (16) oder durch eine Schraub- oder Nietverbindung.
